# EUROPEAN PATENT SPECIFICATION

(11) **EP 2 685 264 B1**
(45) Date of publication and mention of the grant of the patent: **02.12.2020**
(21) Application number: 13175175.2
(22) Date of filing: 04.07.2013
(51) Int. Cl.: G01N 35/00

(54) **Automated calibration method and system for a diagnostic analyzer**
Automatisches Kalibrierverfahren und System für ein diagnostisches Analysegerät
Procédé d'étalonnage automatique et système pour analyseur de diagnostic

(30) Priority: 13.07.2012 US 201213548769
(43) Date of publication of application: 15.01.2014
(73) Proprietor: IDEXX LABORATORIES, INC., Westbrook, Maine 04092 (US)
(72) Inventor: Hammond, Jeremy, Gorham, ME Maine 04038 (US); Pelletier, Dominic, Raymond, ME Maine 04071 (US); Aguiar, Jason, Freeport, Maine 04032 (US)
(74) Representative: Sajda, Wolf E.

(56) References cited:
- EP-A2- 2 402 765
- WO-A1-03/019184
- WO-A2-2008/100941
- US-A1- 2011 276 342
- US-B1- 6 787 361

## Description

### BACKGROUND OF THE INVENTION

### Field of the Invention

The present invention generally relates to diagnostic instruments for human and veterinary applications, and more specifically relates to methods and systems for calibrating such instruments.

### Description of the Prior Art

Diagnostic instruments have been used for decades in both the human and veterinary markets. These instruments include hematology analyzers, blood chemistry analyzers and other instruments that determine certain physiological properties of patients. In the veterinary market, the VetTest® chemistry analyzer and the VetAutoread™ automated hematology analyzer have been available since at least the 1990's.

Some analyzers, like the VetAutoread™ hematology analyzer manufactured by IDEXX Laboratories, Inc. of Westbrook, Maine, (see, www.idexx.com), utilize a fixed optical reference to determine instrument performance. Other analyzers, like the IDEXX LaserCyte® hematology analyzer, incorporate polymers with fixed size and index of refraction to ensure optical performance referred to as Qualibeads™.

In addition, some analyzers, like the Sysmex XT-V manufactured by Sysmex Corp. of Hyogo, Japan, (see, www.sysmex.com), utilize a fixed cell control material to ensure assay performance. The veterinary market is very cost sensitive and controls are not run in the same manner as in human practices, which generally run fixed cell controls approximately at least once per 8-hour shift. In addition, for veterinary applications, species specific concerns arise since each species may have a different response to the system chemistry and different algorithms are often employed by species. Therefore, alternative methods are required to ensure instrument performance.

Patient-based approaches have been proposed, such as described in the aforementioned pending U.S. Patent Application Serial No. 12/932,192, that provide a means to trend patient data in batches to reduce the impact of individual patient responses. The batches can then be evaluated in a control chart utilizing control chart rules to determine if the system has moved out of control.

Fuzzy Logic approaches can then be used to define system optimization adjustments that bring the system back into control. This approach has the inherent benefit that the analyses are performed with patient data on a species-specific basis. This approach can run into difficulties if there are external factors that cause system shifts, such as reagent lot changes. Alternative approaches are required to handle patient sample data sets that are convoluted with reagent lot variability.

US 6 787 361 B1 is considered relevant and relates to procedures for tracking clinical laboratory measurements and calibrating measurement systems to ensure measurement reliability.

### OBJECTS AND SUMMARY OF THE INVENTION

According to the invention, the problem is solved by the subject-matter outlined in the independent claims. Advantageous further developments of the invention are set forth in the dependent claims.

It is an object of the present invention to provide an automated system and method for optimizing a diagnostic instrument, such as a blood chemistry analyzer, in real time. It is another object of the present invention to provide a system and method for calibrating a chemistry analyzer which automatically employ a species and lot-specific algorithm on patient samples to monitor the performance of the analyzer and through feedback adjust the parameters of the analyzer to maintain the analyzer within its calibration specifications.

It is yet another object of the present invention to provide a system and method for automatically calibrating a human or veterinary diagnostic instrument, such as a chemistry analyzer, based on patient samples using a centroid algorithm coupled with field population data for each species and lot supported.

It is a further object of the present invention to provide an automated system and method for calibrating a diagnostic analyzer which overcome the inherent disadvantages of known analyzer calibration systems and methods.

In accordance with one form of the present invention, a system and method for automated, real-time calibration of a diagnostic instrument, which includes but is not limited to a hematology analyzer, such as the aforementioned LaserCyte® analyzer or the ProCyte Dx® analyzer, each of which is manufactured by IDEXX Laboratories, Inc., or a dry reagent test slide chemical analyzer, such as the Catalyst DX® analyzer, also manufactured by IDEXX, to name a few (collectively referred to herein as "diagnostic analyzers"), used for veterinary or human applications, receive the diagnostic (e.g., chemistry) results of patient samples calculated by the analyzer using the analyzer's pre-set parameters (such as optical gain, for example), and apply a centroid calculation algorithm to the patient sample diagnostic results to obtain species and lot-specific centroid (median) values.

Then, population data is gathered from other instruments running the same species and lots to determine target population centroids. Comparison of the specific instrument centroid to the population target centroid provides a measure of specific instrument accuracy bias to the population. If the accuracy bias does not exceed a predetermined threshold, then no optimization factor (or factors) is applied to the patient sample diagnostic results calculated by the analyzer using its pre-set parameters (e.g., optical gain).

However, should the accuracy bias exceed a predetermined threshold, then the method and system of the present invention apply an optimization factor (or factors) to the patient sample diagnostic results to obtain adjusted diagnostic results of the patient samples which are now within acceptable limits or ranges. Such adjusted diagnostic results are read out or displayed by the analyzer and represent a more accurate calculation of the patient sample diagnostic results.

The one or more optimization factors are derived from the application of optimization logic to the instrument reported centroid. The optimization logic includes finding the population centroid for the particular lot and animal species being tested and determining the bias from the instrument centroid, and then aggregating over multiple lots for the species to determine a lot-independent bias.

For many chemistry analyzers, the reagent test slides used therein have lots associated with them, and the analyzers have calibration curves associated with each of the lots. Therefore, the response of the chemistry analyzers may be different from one lot to another. A lot-specific field population centroid may be predetermined and used in the calculation of the bias in the diagnostic results for a particular analyzer.

Alternatively, the field population centroids of several lots may be aggregated, such as by calculating their differences, or deltas, and the average of the lots, to determine a global field population centroid that is not lot-specific and which may be applied to a particular chemistry analyzer to derive a correction factor for compensating the analyzer's bias in its computation of a diagnostic results. It is preferred to use a global field population centroid rather than a lot-specific field population centroid, since a diagnostic analyzer may run through an entire lot of test slides in about one month.

The optimization factor (or factors) is used in modifying the calculations performed by the analyzer with its pre-set parameters to correct the results of such calculations without the need to actually change the analyzer's pre-set parameters stored in the analyzer's memory.

Thus, for example, by applying the derived optimization factor, the overall gain to the analyzer's optical system may be effectively adjusted from 1.03 to 1.04 to more accurately provide patient sample diagnostic results read out or displayed by the analyzer. The optimization factor may be, for example, a multiplying factor, or an offset or additive factor.

The calibration method is preferably applied each time the diagnostic analyzer generates patient sample results so that the calculated results may be automatically adjusted in real time, and the optimization factor (which is applied to the analyzer's pre-set parameters) may be continually changed as is required, in order to provide more accurate patient readings.

In use, particularly when running human analyzers, the user could be alerted that an adjustment is likely needed. The user can then allow the adjustment and follow-up with a control fluid test to ensure the adjustment was proper, i.e. before running additional samples. For veterinary applications, adjustments can be made automatically. Also, in the veterinary field, targets and ranges are typically species specific, e.g. dogs, cats, horses.

A system which implements the automated calibration method of the present invention can be realized by software, or more precisely, an application program, or by firmware or hardware. The system may include a memory, such an EEPROM (electronically erasable programmable read only memory) in which are stored the centroid calculation algorithm, the population centroid target and the optimization factors.

Memories or storage devices are also provided for storing the unadjusted diagnostic results of patient samples calculated by the analyzer using the pre-set parameters (e.g., optical gain) of the analyzer, the instrument centroid and field population centroid target, and the adjusted or corrected diagnostic patient sample results resulting from the application of the optimization logic.

A microprocessor, microcontroller or CPU may be employed to carry out the application of the centroid calculation algorithm to the patient data, compare the field population centroid targets stored in memory to the specific instrument centroid, or make any other comparisons (such as evaluating certain histogram features, for example, the width) to determine if the bias in the instrument centroid values is within the preset limits or ranges, and derive the optimization factor to be applied to the analyzer's pre-set parameters.

The pre-set limits may be derived from certain criteria based on the histogram of the field population; for example, the limits may be based on the 2SD (standard deviation) points of the field population centroid. Thus, if the shape of the reference (field) population centroid is wide, then there is less confidence in the target analyzer's centroid, and the limits (i.e., the threshold outside of which the optimization factor should be applied) should also be widened so as not to over-adjust for noise.

Also taken into account in setting the limits may be a consideration of what is diagnostically significant and meaningful. In other words, it is preferable not to set the limits so tight that every diagnostic result must be corrected, and not to set the limits so loose that the optimization factor is never applied.

Field population targets are governed by a set of minimum requirements in order to ensure sufficient data to be representative of the field. For example, a minimum number of individual instruments may be required in order to have enough instrument-to-instrument as well as sample variation. A preferred value for the minimum number of instruments may be about ten, but any value from two or larger could be justified based on the specific application.

In addition, for an instrument to be considered for the population centroid, it must have a minimum number of runs performed on that species on that lot. A preferred value for the minimum number of runs per instrument may be about ten, but any value from two or larger could be justified based on the specific application. Access to field population centroid targets could be derived through the use of a web server that aggregates all of the field data and provides the summary or raw data back to the individual applications.

The population data could be distributed to the instruments through physical media, electronic delivery (FTP (file transfer protocol) or the like, for example), or through direct contact with the host server. Of course, it should be realized that such structure (e.g., memories, microprocessor and the like) may already exist within the analyzer, and such structure may be conveniently utilized in performing the functions of the automated calibration method of the present invention.

These and other objects, features and advantages of the present invention will be apparent from the following detailed description of illustrative embodiments thereof, which is to be read in connection with the accompanying drawings.

### BRIEF DESCRIPTION OF THE DRAWINGS

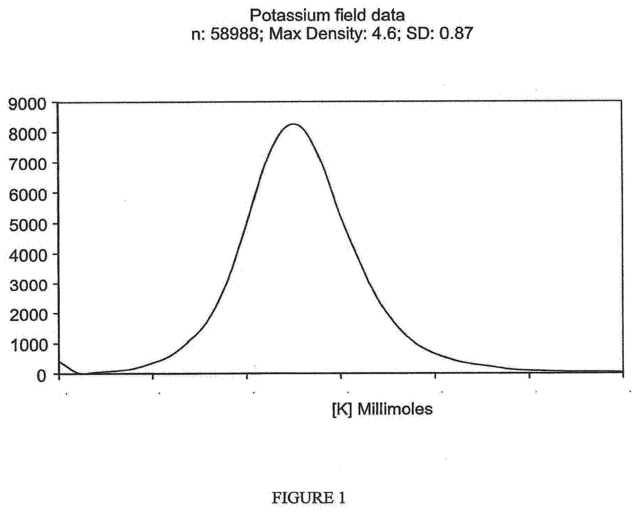

- FIGURE 1: is an exemplary representative histogram of field population data across greater than 1000 instruments for a single lot of slides (the number of slides tested is 58,988) for a blood chemistry analyzer, specific to canine results for potassium (K) concentration. The representation is in the form of a graph of potassium field data, with frequency of occurrence as the ordinate and concentration as the abscissa, in mMol (millimoles). The maximum concentration occurred at 4.6, and the standard deviation was measured as 0.87. This representation clearly demonstrates the centroid (median) of the histogram as the population target for canine samples on this lot of sample slides.

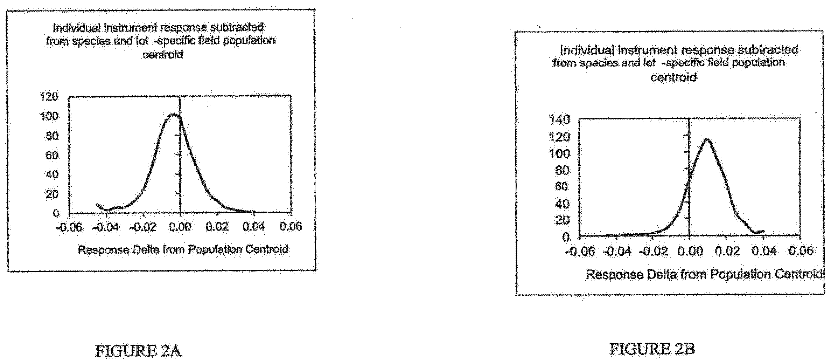

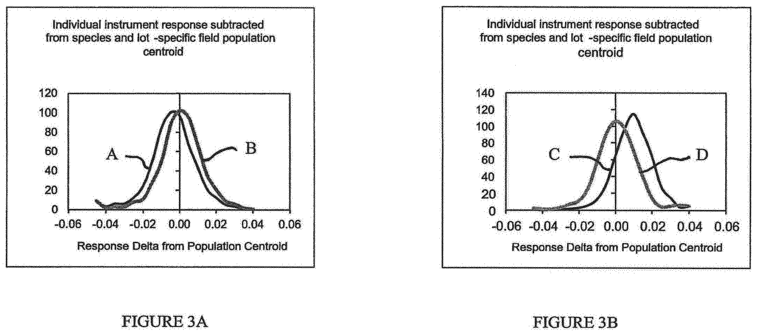

- FIGURE 2: is a histogram comparison for the target data from FIGURE 1 compared with a specific instrument running canine samples on the same slide lot used in calculating the centroid of the field population data shown in FIGURE 1. FIGURE 2A shows a histogram for an instrument that has minimal bias to the population target and would not be a candidate for optimization (but is nevertheless optimized in FIGURE 3A to facilitate an understanding of the invention). FIGURE 2B shows a histogram for an instrument that has a bias to the population target and would be a candidate for optimization. More specifically, FIGURE 2A is a graph of an individual instrument response centroid subtracted from the species and lot-specific field population centroid shown in FIGURE 1, with frequency of occurrence as the ordinate and the response change, or delta, from the population centroid as the abscissa. FIGURE 2B is a graph of the individual instrument response subtracted from the species and lot-specific field population centroid shown in FIGURE 1, with frequency of occurrence as the ordinate and the response change, or delta, from the population centroid shown in FIGURE 1.
- FIGURE 3: is a graph of the data in FIGURE 2 overlaid with optimization adjusted histogram to show the instrument response to the optimization adjustment and centering of the data to target. More specifically, FIGURE 3A is a graph of the individual instrument response centroid subtracted from the species and lot-specific field population centroid shown in FIGURE 1, taken from FIGURE 2A, and an optimized instrument response centroid (subtracted from the field population centroid), with frequency of occurrence as the ordinate and the response change, or delta, from the population centroid as the abscissa. The curve of the individual instrument response centroid subtracted from the field population centroid is designated in FIGURE 3A by reference letter A, and the curve of the optimized instrument response centroid (subtracted from the field population centroid) is designated in FIGURE 3A by reference letter B. FIGURE 3B is a graph of the individual instrument response centroid subtracted from the species and lot-specific field population centroid shown in FIGURE 1, taken from FIGURE 2B, and an optimized instrument response centroid (subtracted from the field population centroid), with frequency of occurrence as the ordinate and the response change, or delta, from the population centroid as the abscissa. The curve of the individual instrument response centroid subtracted from the field population centroid is designated in FIGURE 3B by the reference letter C, and the optimized instrument response centroid (subtracted from the population centroid) is designated in FIGURE 3B by reference letter D.

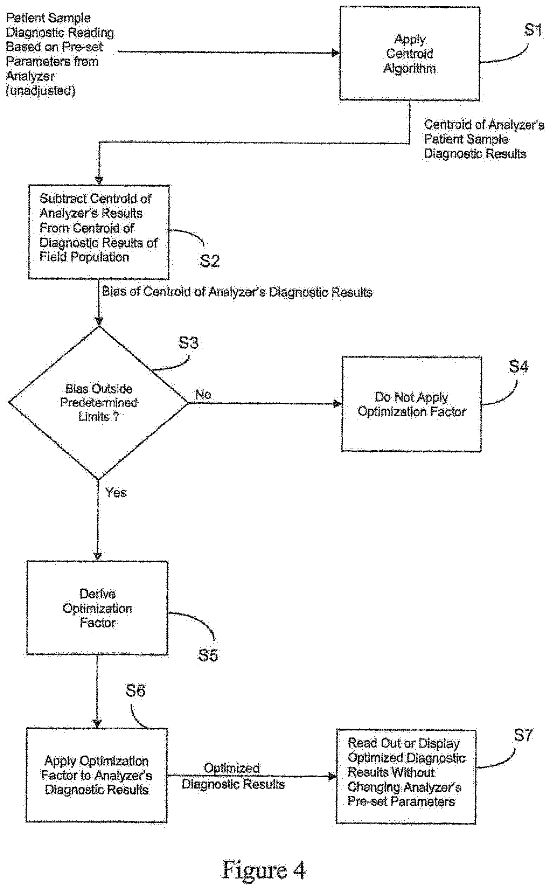

- FIGURE 4: is a flow chart showing the operation of the system and method of the present invention for real-time, automated calibration of a diagnostic analyzer.

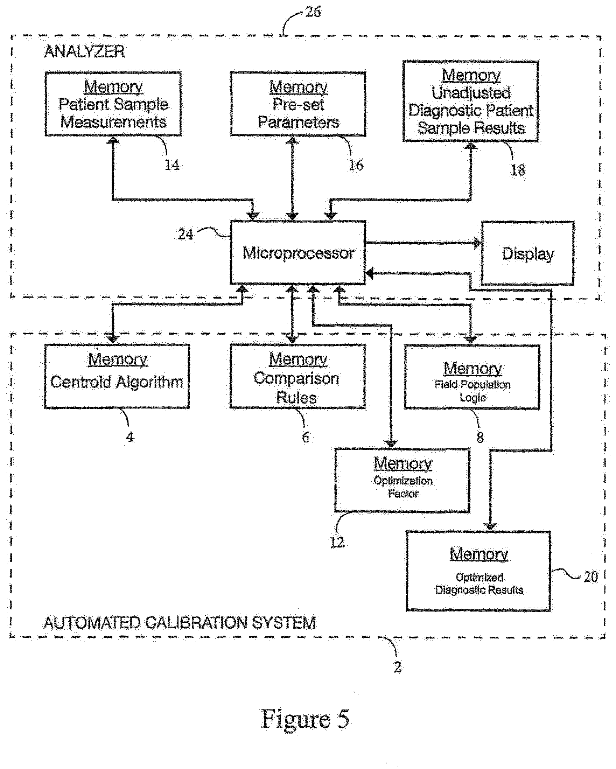

- FIGURE 5: is a block diagram of an automated system for calibrating a diagnostic analyzer formed in accordance with the present invention, and illustrating the cooperation between the system and the diagnostic analyzer.

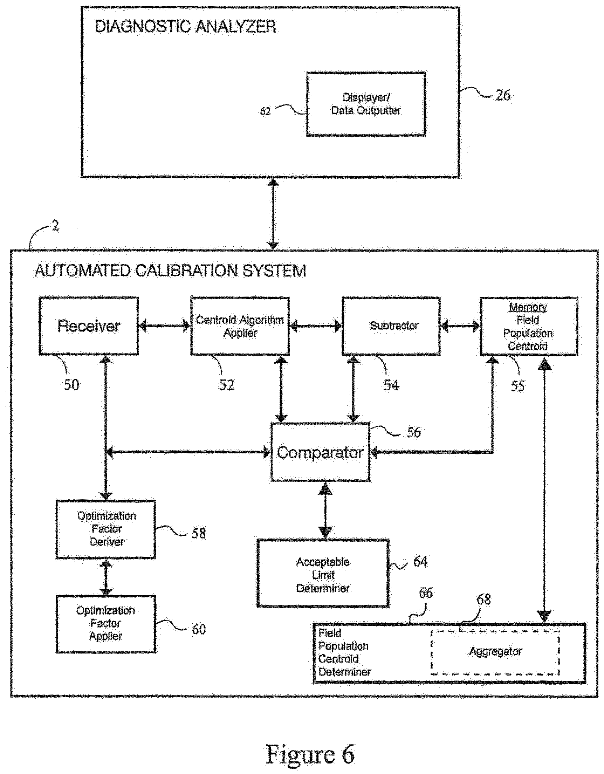

- FIGURE 6: is a block diagram of an alternative embodiment of an automated system for calibrating a diagnostic analyzer formed in accordance with the present invention, and illustrating the cooperation between the system and the diagnostic analyzer.

### DETAILED DESCRIPTION OF THE PREFERRED EMBODIMENTS

A preferred form of the method of the present invention, and system implementing the method, will now be described. In accordance with one form of the present invention, an automated method for calibrating in real-time a diagnostic analyzer, such as a blood chemistry analyzer, preferably includes the steps of receiving the diagnostic (e.g., chemistry) results of patient samples calculated by the analyzer using the analyzer's pre-set parameters (such as optical gain, for example), and applying a centroid calculation algorithm (that could manifest as any centrally tending algorithm that identifies the natural center of the data set and could be calculated using average, median, mode, or a more advanced algorithm for finding the center of maximum density) to the patient sample diagnostic results to obtain a centroid (median) value representing the instrument response for a particular species on a particular lot.

The method further includes the steps of comparing field population centroid values to the specific instrument centroid values by subtracting one from the other to determine a bias in the centroid of the diagnostic results of the instrument, and comparing the bias from the instrument centroid to the population centroid to limits or ranges which are used to test the extent to which the instrument response resides within such limits or ranges.

If the instrument centroid bias falls within the predetermined limits or ranges, then no optimization factor is applied to the patient sample diagnostic results calculated by the analyzer using its pre-set parameters (e.g., optical gain), and the un-optimized patient sample diagnostic results are read out or displayed by the analyzer.

However, should the bias of the instrument centroid fall outside the pre-set limits or ranges during such a comparison, then the method of the present invention further includes the step of applying optimization logic to the instrument based on the population centroid results to obtain adjusted diagnostic results of the patient samples which are now within the acceptable limits or ranges. Such adjusted diagnostic results are read out or displayed by the analyzer and represent a more accurate calculation of the patient sample diagnostic results.

It should be realized that the term "factor" used herein means an adjustment; the optimization factor may be a multiplying factor or an offset, for example.

Furthermore, the automated calibration method includes the steps of deriving from the application of the optimization logic to the instrument results one or more optimization factors, and modifying the calculations performed by the analyzer with its pre-set parameters by the optimization factor (or factors) to correct the results of such calculations without the need to actually change the analyzer's pre-set parameters stored in the analyzer's memory.

Thus, for example, by applying the derived optimization factor, the overall gain to the analyzer's optical system may be effectively adjusted from 1.03 to 1.04 to more accurately provide patient sample diagnostic results read out or displayed by the analyzer. Optimization is achieved based on the fundamental operations of the desired analyzer. Automated analyzers commonly have factors associated with reported results that generally function as multipliers or additive offsets.

Other mathematical operations can also be used in the optimization logic of the described invention. The optimization approach will determine the ratio of the instrument centroid to the field population centroid and iteratively update the optimization factor and predetermine the instrument centroid. The iteration is complete where the ratio of instrument centroid to field population centroid is minimized at a value of 1 or some other appropriate minimum.

The calibration method is preferably applied each time the diagnostic analyzer generates patient sample results so that the calculated results may be adjusted in real time, and the optimization factor (which is applied to the analyzer's pre-set parameters) may be continually changed as is required, in order to provide more accurate patient readings.

In a more preferred embodiment of the present invention, the centroid algorithm is a median of the patient data. Furthermore, in another preferred form of the invention, the centroid algorithm finds the densest portion of the patient data. In use, particularly when running human analyzers, the user could be alerted that an adjustment is likely needed.

The user can then allow the adjustment and follow-up with a control fluid test of the instrument to ensure the adjustment was proper, i.e. before running additional samples. For veterinary applications, adjustments can be made automatically. More specifically, in the veterinary field, targets and ranges are typically species specific, e.g. dogs, cats, horses.

The methods described herein are generally applicable to blood chemistry results which include but are not limited to the following list of parameters: ALT (alanine transferase), AST (aspartate transferase), GGT (gamma-glutamyl transpeptidase), K (potassium), Cl (chloride), Na (sodium), TP (total protein), ALKP (alkaline phosphatase), BUN (blood urea nitrogen), TBIL (total bilirubin), and others. The approach is generally applicable to immunoassay results as well, including but not limited to the following list: T4 (thyroxine), cortisol, bile acids, and others.

The approach is generally applicable to hematology results as well, including but not limited to the following list: RBC (red blood cell), MCV (mean corpuscular volume), HGB (hemoglobin), HCT (hematocrit), MCH (mean corpuscular hemoglobin), MCHC (mean corpuscular hemoglobin concentration), PLT (platelet), WBC (white blood cell), RETIC (reticulocyte), NEU neutrophil), LYM (lymphocyte), MONO (monocyte), EOS (eosinophil), BASO (basophil), and others.

One common concern for this type of approach relates to customers that run predominantly ill patients. If a population of patients is ill, then their centroid response could be skewed and might generate an alarm when the instrument is functioning correctly and the responses are appropriately reported. The proposed method mitigates against this concern by requiring multiple instruments and patients in any population for comparisons.

The desired implementation and knowledge of the populations will define the minimum sample sizes for a number of instruments and runs per instrument in order to have an appropriate target that is insensitive to specific clinic population biases. For the individual clinic running samples, the approach can be optimized for each customer.

A practitioner will know if they are a specialty clinic (oncology practice, for example) and that his or her responses will potentially or probably be biased with respect to the general population of health patients. The system can be optimized for these parameters to handle these conditions.

In accordance with one form of the present invention, an automated method for calibrating in real time a diagnostic analyzer, such as a blood chemistry analyzer, includes the step of receiving diagnostic results of patient samples calculated by the analyzer using the analyzer's pre-set parameters (e.g., optical gain). Then, the central tendency of the patient sample diagnostic results is calculated. Preferably, a centroid calculating algorithm is applied to the diagnostic results to provide an instrument centroid (i.e., the mean or median of the distribution of the instrument's diagnostic results data) as a function of chemical reagent test slide lot and species (e.g., human, equine, feline, canine, and the like).

Reagent test slide lots and species should not be intermixed when calculating the centroid of the analyzer diagnostic results. The centroid should be apparent from the data distribution of diagnostic results, which should look like a bell curve, and similar to that shown in FIGURE 1 of the drawings, although FIGURE 1 shows a field population centroid, as will be explained in greater detail.

The centroid calculation algorithm which is applied to the diagnostic results of patient samples calculated by the analyzer may be any one of many algorithms for calculating a centroid of a data distribution. For example, a moving average algorithm may be applied to the patent sample diagnostic results to calculate the centroid of the analyzer's response. Alternatively, the centroid of the patient sample diagnostic results may be determined by other centroid calculating algorithms, including mean, median, mode, max density and other more elaborate algorithms well known to those skilled in the art.

In accordance with the method of the present invention, the central tendency of a field population of the results of comparable diagnostic analyzers, as a function of the same test reagent lot and species as the diagnostic results of the analyzer being calibrated, is calculated. Again, preferably a centroid of the field population of analyzer results is determined, preferably using a centroid calculating algorithm such as described above.

There should be minimum requirements for the number of comparable diagnostic analyzers in the population and the number of runs per analyzer in order to ensure that there exists sufficient data to be representative of the field. For example, a preferred value for the minimum number of instruments may be about ten, but any value from two or larger could be justified based on the specific application.

Furthermore, a preferred value for the minimum number of runs per analyzer in the field population may be about ten, but any value from two or larger could be justified based on the specific application. The centroid of the field population of analyzer results should resemble a bell curve, such as shown in the example for potassium (K) concentration field data illustrated by FIGURE 1 of the drawings.

With reference to FIGURE 1, for an exemplary field population of analyzer results of comparable diagnostic analyzers performing potassium (K) tests using chemical reagent test slides of the same lot, it can be seen that the potassium field data centroid has a mean or median of about 4.5.

In accordance with the method of the present invention, the instrument centroid is compared with the population centroid, and any bias in the instrument centroid is determined from this comparison.

In this regard, reference should be had to FIGURE 2 of the drawings. In FIGURE 2A, a histogram for an instrument that has a minimal bias, determined from subtracting the individual instrument response centroid from the species and lot-specific field population centroid, is shown. If this bias is within a predetermined range or limits, it is considered minimal and no optimization of the analyzer's diagnostic results of patient samples would be required.

On the other hand, FIGURE 2B shows a histogram for a diagnostic analyzer which exhibits a bias determined from subtracting its response centroid from the species and lot-specific field population centroid, such as shown in FIGURE 1, which is outside the predetermined range or limits. Under such circumstances, the analyzer's diagnostic results of patient samples should be optimized by applying an optimization factor thereto.

More specifically, for diagnostic analyzers that exhibit a bias in their centroid of patient sample diagnostic results, determined from a comparison with the centroid of diagnostic results of a field population of comparable analyzers, an optimization logic is applied to the analyzer's centroid diagnostic results to obtain adjusted diagnostic results of the patient samples which are now within the acceptable limits or range. This optimization logic essentially moves the analyzer's centroid over by a fixed optimization factor applied to the patient sample diagnostic results calculated by the analyzer using its pre-set parameters so that the bias is now minimized or eliminated.

For example, the centroid bias shown in FIGURE 2A of the analyzer's patient sample diagnostic results, which needed minimal or no optimization, which is also shown in FIGURE 3A, has been corrected nevertheless by applying an optimization factor to the analyzer's patient sample diagnostic results to essentially minimize or negate the bias so that the centroid of the diagnostic results of the analyzer substantially coincide with the centroid of the diagnostic results of the field population of comparable analyzers. The optimized centroid diagnostic results are shown in FIGURE 3A.

In FIGURE 3B, the bias of the centroid of patient sample diagnostic results of the analyzer shown therein requires optimization, as it falls outside the predetermined range or limits. An optimization factor is applied to the patient sample diagnostic results calculated by this analyzer using its pre-set parameters to move the centroid of the analyzer's diagnostic results to be more in line with the median or centroid of the diagnostic results in the field population of comparable analyzers.

The optimized centroid of the patient sample diagnostic results of this analyzer is also shown in FIGURE 3B. The optimized or adjusted diagnostic results are then read out by the analyzer without the need to change the analyzer's pre-set parameters. Thus, the calculations performed by the analyzer, with its pre-set parameters, are modified using the optimization factor to correct the results of the analyzer's calculations without the need to change the analyzer's pre-set parameters.

The optimization factors are derived from the application of optimization logic to the analyzer's centroid diagnostic results. The optimization logic includes finding the population centroid for the particular lot and animal species being tested and determining the bias from the instrument centroid, and then aggregating over multiple lots for the species to determine a lot-independent bias.

As stated previously, for many chemistry analyzers, the reagent test slides have lots associated with them, and the analyzers have calibration curves associated with each of the lots. Therefore, the response of the chemistry analyzers may be different from one lot to another. A lot-specific field population centroid may be predetermined and used in the calculation of the bias in the diagnostic results for a particular analyzer.

Alternatively, the field population centroids of several lots may be aggregated, such as by calculating their differences, or deltas, and the average of the lots, to determine a global field population centroid that is not lot-specific and which may be applied to a particular chemistry analyzer to derive a correction factor for compensating the analyzer's bias in its computation of a diagnostic results. It is preferred to use a global field population centroid rather than a lot-specific field population centroid, since a diagnostic analyzer may run through an entire lot of test slides in about one month.

The derived optimization factor or factors may include multiple patient factors, linear offsets or other mathematical manipulations of the raw data (the diagnostic results) to achieve accurate calibration results.

FIGURE 4 is a simplified flow chart illustrating the operation of the automated system of the present invention for calibrating a diagnostic analyzer, such as a blood chemistry analyzer. The analyzer calculates the diagnostic results using the analyzer's pre-set parameters (such as optical gain, for example). The patient sample diagnostic readings resulting from the analyzer's calculations based on patient samples are acted upon in a subroutine in which a centroid calculating algorithm is applied (Step S1). This centroid calculation algorithm may be a moving averages algorithm. The result of the application of this algorithm is a centroid of the analyzer's patent sample diagnostic results.

In Step S2, the centroid of the analyzer's patient sample diagnostic results are compared to a centroid of diagnostic results of a field population of comparable analyzers, which may be pre-calculated and stored in the memory of the analyzer. This comparison may be performed by subtracting the centroid of the analyzer's diagnostic results from the centroid of diagnostic results of the field population of comparable analyzers. The result of this comparison is a bias determination of the centroid of diagnostic results of the analyzer (Step S2).

Now, the bias in the centroid of the analyzer's patient sample diagnostic results is compared to a predetermined range or limits (Step S3). If the bias in the centroid of the analyzer's patient sample diagnostic results is within the acceptable limits, then no optimization factor is applied to the analyzer's patient sample diagnostic results (Step S4). However, if the bias in the centroid of the analyzer's patient sample diagnostic results is outside the acceptable limits, then the system and method of the present invention derive or calculate an optimization factor or factors (Step S5).

The optimization factor or factors are then applied to the analyzer's patient sample diagnostic results (Step S6) to obtain optimized patient sample diagnostic results. The optimized patient sample diagnostic results, or the un-optimized results if no optimization is required, are read out by the analyzer, and the analyzer's pre-set parameters are not changed (Step S7).

The optimization factor (or factors) is used in modifying the calculations performed by the analyzer with its pre-set parameters to correct the results of such calculations without the need to actually change the analyzer's pre-set parameters stored in the analyzer's memory. Thus, for example, by applying the optimization factor, the overall gain to the analyzer's optical system may be effectively adjusted from 1.03 to 1.04 to more accurately provide patient sample diagnostic results read out or displayed by the analyzer.

The calibration method is preferably applied each time the diagnostic analyzer generates patient sample results so that the calculated results may be automatically adjusted in real time, and the optimization factor (which is applied to the analyzer's pre-set parameters) may be continually changed as is required, in order to provide more accurate patient readings.

FIGURE 5 is a block diagram of one form of a system 2 which implements the automated calibration method of the present invention. This system 2 can be realized by software, or more precisely, an application program, or by firmware or hardware. The system 2 may include a memory 4, such as an EEPROM (electronically erasable programmable read only memory) in which is stored the centroid algorithm, a memory 6 in which is stored the comparison rules, a memory 8 in which is stored the field population logic, and a memory 12 in which is stored the optimization factor.

Memories or storage devices are also provided for storing patient sample measurements determined by the analyzer (memory 14), the pre-set parameters of the analyzer (memory 16), the unadjusted diagnostic results of patient samples calculated by the analyzer using the pre-set parameters (e.g., optical gain) of the analyzer (memory 18), and the optimized diagnostic results (memory 20) resulting from the application of the comparison logic.

A microprocessor, microcontroller or CPU 24 may be employed to carry out the application of the centroid algorithm and comparison logic between the patient data and population target, or make any comparisons to determine if the bias of the instrument centroid is within the limits or ranges, and derive the optimization factor to be applied to the analyzer's pre-set parameters. Of course, it should be realized that such structure (e.g., memories, microprocessor and the like) may already exist within the analyzer 26, and such structure may be conveniently utilized in performing the functions of the automated calibration method of the present invention.

FIGURE 6 is a block diagram of a second form of a system 2 which implements the automatic calibration method of the present invention. The automated system calibrates in real time a diagnostic analyzer 26, where the diagnostic analyzer performs calculations on patient diagnostic samples using pre-set parameters. Preferably, the automated calibration system includes a receiver 50 which receives diagnostic results of patient samples calculated by the analyzer using the pre-set parameters of the analyzer.

A centroid algorithm applier 52 applies a centroid calculation algorithm to the patient sample diagnostic results of the analyzer to obtain a centroid of the analyzer's patient sample diagnostic results. A subtractor of centroids 54 receives the centroid of the analyzer's diagnostic results, and subtracts the centroid from a centroid of diagnostic results of a field population of comparable analyzers, which may be stored in a memory of the analyzer.

The centroid subtractor 54 thus determines a bias in the centroid of the analyzer's diagnostic results. This bias is provided to a bias comparator 56, which compares the bias to a predetermined acceptable range or limits. If the bias comparator 56 determines that the bias of the centroid of the analyzer's diagnostic results is within the acceptable limits, then no optimization factor is applied to the analyzer's diagnostic results.

However, if the bias comparator 56 determines that the bias is outside the predetermined range or limits, then an optimization factor will be applied to the analyzer's diagnostic results which, effectively, will move the centroid of the diagnostic results of the analyzer more in line with the centroid of the diagnostic results of the field population of comparable analyzers and within the acceptable range or limits.

The system may further include an optimization factor calculator 58. The optimization factor calculator 58 derives from the application of optimization logic to the analyzer's centroid diagnostic results one or more optimization factors. The optimization factor or factors may be based on the extent or degree of deviation of the analyzer's centroid of patient sample diagnostic results from the field population centroid.

A greater degree of deviation may require the application of an optimization factor having a relatively greater offset or multiplier. Alternatively, the same predetermined optimization factor may be applied not based on the degree of deviation but rather in most or all instances where the bias of the centroid of the patient sample diagnostic results exceeds the predetermined acceptable limits or threshold.

The system further includes an optimization factor applier 60, which applies the optimization factor or factors to the analyzer's diagnostic results, and obtains therefrom optimized diagnostic results. The optimized diagnostic results, or the un-optimized results if no optimization is required, are displayed or read out, or provided, on a display or data outputter 62.

Although in a preferred form of the present invention the bias in the centroid of the patient sample diagnostic results of the analyzer are compared to predetermined acceptable limits, it is envisioned to be within the scope of the present invention to have the system determine such acceptable limits. Accordingly, the automated system may further include an acceptable limit determiner 64 which determines the acceptable limits by calculating, for example, the standard deviation of the centroid of diagnostic results of the field population of comparable analyzers.

Furthermore, the automated system of the present invention may include a field population centroid determiner 66 which determines the centroid of diagnostic results of the field population of comparable analyzers. The field population of diagnostic results used by the field population centroid determiner 66 may be limited to a specific lot of samples to derive a centroid of a lot-specific field population of diagnostic results of comparable analyzers. This centroid of the lot-specific field population of diagnostic results of comparable analyzers is compared with the centroid of the patient sample diagnostic results of the analyzer to determine the bias in the centroid of the patient sample diagnostic results of the analyzer.

Alternatively, the field population used by the field population centroid determiner 66 includes diagnostic results from a plurality of sample lots. In such an embodiment, the field population centroid determiner 66 has an aggregator 68 which aggregates the diagnostic results of the plurality of sample lots, thereby deriving a centroid of a global field population of diagnostic results of comparable analyzers.

The centroid of the global field population of diagnostic results of comparable analyzers is compared with the centroid of the patient sample diagnostic results of the analyzer to determine the bias in the centroid of the patient sample diagnostic results of the analyzer.

Automated diagnostic analyzers, such as blood chemistry analyzers, can have their accuracy improved and bias reduced in accordance with the system and method of the present invention utilizing population statistics with centroid calculations. A simple split sample comparison with a reference analyzer or comparison with a control material can verify proper adjustments to the analyzer's settings and ensure accuracy.

The system and method of the present invention are quite useful with veterinary analyzers and in veterinary offices, where control fluid costs are prohibitive to their regular use, and many are based on human fixed cells requiring different algorithms than used with patient samples.

The system and method of the present invention will make the adjustments, as required, to the calculations performed by the analyzer, in real time, without the need for the clinician to make adjustments to the analyzer manually based on the clinician's interpretation of graphs and other data presented on a display of the analyzer, thereby minimizing or eliminating errors in the clinician's analysis or his possibly overcorrecting a perceived instrumentation bias.

## Claims

1. An automated method for calibrating in real time a diagnostic analyzer (26), which comprises the steps of:
- receiving diagnostic results of patient samples calculated by the analyzer (26) using pre-set parameters of the analyzer (26);
- calculating a centroid of the patient sample diagnostic results of the analyzer (26);
- comparing the centroid of the patient sample diagnostic results of the analyzer (26) with a centroid of diagnostic results of a reference population of comparable analyzers to determine a bias in the centroid of the patient sample diagnostic results of the analyzer (26);
- comparing the bias in the centroid of the patient sample diagnostic results of the analyzer (26) with predetermined acceptable limits;
- if the bias of the centroid of the patient sample diagnostic results of the analyzer (26) falls within the predetermined acceptable limits, then not applying an optimization factor to the patient sample diagnostic results calculated by the analyzer (26) using the pre-set parameters of the analyzer (26);
- if the bias of the centroid of the patient sample diagnostic results of the analyzer (26) falls outside the predetermined acceptable limits, then applying the optimization factor to the patient sample diagnostic results of the analyzer (26) to obtain optimized patient sample diagnostic results; and
- outputting the optimized or un-optimized patient sample diagnostic results by the analyzer (26).

2. An automated method for calibrating in real time a diagnostic analyzer (26) as defined by Claim 1,
which further comprises the step of calculating the centroid of diagnostic results of a reference population of comparable analyzers, wherein the centroid of the diagnostic results of the reference population comparable analyzers is calculated using certain selected species of animals, and wherein the centroid of the patient sample diagnostic results of the analyzer (26) is derived using the same certain species of animals as the certain species of animals used for the reference population.

3. An automated method for calibrating in real time a diagnostic analyzer (26) as defined by Claim 1,
wherein the diagnostic analyzer (26) is a hemotology analyzer, a chemistry analyzer or a blood chemistry analyzer.

4. An automated method for calibrating in real time a diagnostic analyzer (26) as defined by Claim 1,
which further comprises the step of:
determining the acceptable limits by calculating the standard deviation of the centroid of diagnostic results of the reference population of comparable analyzers.

5. An automated method for calibrating in real time a diagnostic analyzer (26) as defined by Claim 1,
which further comprises the step of:
determining the centroid of diagnostic results of the reference population of comparable analyzers.

6. An automated method for calibrating in real time a diagnostic analyzer (26) as defined by Claim 1,
which further comprises the step of:
determining the centroid of diagnostic results of the reference population of comparable analyzers, the reference population of diagnostic results used in determining the centroid of diagnostic results being limited to a specific lot of samples thereby deriving a centroid of a lot-specific reference population of diagnostic results of comparable analyzers, the centroid of the lot-specific reference population of diagnostic results of comparable analyzers being compared with the centroid of the patient sample diagnostic results of the analyzer (26) to determine the bias in the centroid of the patient sample diagnostic results of the analyzer (26).

7. An automated method for calibrating in real time a diagnostic analyzer (26) as defined by Claim 1, which further comprises the step of:
determining the centroid of diagnostic results of the reference population of comparable analyzers, the reference population of diagnostic results used in determining the centroid of diagnostic results including diagnostic results from a plurality of sample lots, the determining step including the sub-step of aggregating the diagnostic results of the plurality of sample lots, thereby deriving a centroid of a global reference population of diagnostic results of comparable analyzers, the centroid of the global reference population of diagnostic results of comparable analyzers being compared with the centroid of the patient sample diagnostic results of the analyzer (26) to determine the bias in the centroid of the patient sample diagnostic results of the analyzer (26).

8. A system comprising a diagnostic analyzer and an automated system (2) for calibrating in real time the diagnostic analyzer (26), the diagnostic analyzer (26) performing calculations on patient diagnostic samples using pre-set parameters of the analyzer (26), wherein the analyzer comprises a microprocessor that is adapted to perform individual steps of:
- receiving diagnostic results of patient samples calculated by the analyzer (26) using the pre-set parameters of the analyzer;
- calculating a centroid of the patient sample diagnostic results of the analyzer (26);
- comparing the centroid of the patient sample diagnostic results of the analyzer (26) with a centroid of diagnostic results of a reference population of comparable analyzers to determine a bias in the centroid of the patient sample diagnostic results of the analyzer (26);
- comparing the bias in the centroid of the patient sample diagnostic results of the analyzer (26) with predetermined acceptable limits;
- applying an optimization factor to the patient sample diagnostic results of the analyzer (26) if the bias of the centroid of the patient sample diagnostic results of the analyzer (26) is outside the predetermined acceptable limits and thereby obtaining optimized patient sample diagnostic results, and not applying the optimization factor to the patient sample diagnostic results of the analyzer (26) if the bias of the centroid of the patient sample diagnostic results of the analyzer (26) falls within the predetermined acceptable limits; and
- outputting the optimized or un-optimized patient sample diagnostic results by the analyzer (26).

9. A system as defined by Claim 8,
wherein the microprocessor is adapted to perform further individual steps of:
calculating the centroid of diagnostic results of the reference population of comparable analyzers.

10. A system as defined by Claim 8,
wherein the microprocessor is adapted to perform further individual steps of:
- calculating the centroid of diagnostic results of the reference population of comparable analyzers, using the reference population of diagnostic results which is limited to a specific lot of samples in determining the centroid of diagnostic results thereby deriving a centroid of a lot-specific reference population of diagnostic results of comparable analyzers,
- comparing the centroid of the lot-specific reference population of diagnostic results of comparable analyzers with the centroid of the patient sample diagnostic results of the analyzer (26) to determine the bias in the centroid of the patient sample diagnostic results of the analyzer (26).

11. A system as defined by Claim 8,
wherein the microprocessor is adapted to perform further individual steps of:
calculating the centroid of diagnostic results of the reference population of comparable analyzers, using the reference population of diagnostic results which includes diagnostic results from a plurality of sample lots in determining the centroid of diagnostic results, and aggregating the diagnostic results of the plurality of sample lots, thereby deriving a centroid of a global reference population of diagnostic results of comparable analyzers, the centroid of the global reference population of diagnostic results of comparable analyzers being compared with the centroid of the patient sample diagnostic results of the analyzer (26) to determine the bias in the centroid of the patient sample diagnostic results of the analyzer (26).

12. A system as defined by Claim 8,
wherein the microprocessor is adapted to perform further individual steps of:
determining the acceptable limits, and calculating the standard deviation of the centroid of diagnostic results of the reference population of comparable analyzers.

13. A system (2) as defined by any one of Claims 8 to 12,
wherein the automated system (2) comprises:
- one or more memories (4, 6, 8, 12, 20) in which are stored a centroid algorithm for calculating a centroid of patient sample diagnostic results of the analyzer (26), a centroid of diagnostic results of a reference population of comparable analyzers, logic to compare the analyzer and reference population centroids, predetermined acceptable limits and an optimization factor;
- a microprocessor (24) operatively coupled to the one or more memories (4, 6, 8, 12, 20), and
wherein the microprocessor is adapted to perform further individual steps of:
- calculating the centroid of the patient sample diagnostic results of the analyzer (26), comparing the centroid of the patient sample diagnostic results of the analyzer (26) with the centroid of diagnostic results of the reference population of comparable analyzers and determining therefrom a bias in the centroid of the patient sample diagnostic results of the analyzer (26),
- comparing the bias in the centroid of the patient sample diagnostic results of the analyzer (26) with the predetermined acceptable limits, not applying the optimization factor to the patient sample diagnostic results calculated by the analyzer (26) using the pre-set parameters if the bias of the centroid of the patient sample diagnostic results of the analyzer (26) falls within the predetermined acceptable limits, and applying the optimization factor to the patient sample diagnostic results calculated by the analyzer (26) if the bias of the centroid of the patient sample diagnostic results of the analyzer (26) falls outside the predetermined acceptable limits, and obtaining optimized patient sample diagnostic results; and
- outputting the optimized or un-optimized patient sample diagnostic results.

14. A system as defined by any one of Claim 8-13,
wherein the diagnostic analyzer (26) is a hemotology analyzer, a chemistry analyzer or a blood chemistry analyzer.

## Patentansprüche

1. Automatisiertes Verfahren zum Kalibrieren eines Diagnoseanalysators (26) in Echtzeit, das die folgenden Schritte aufweist:
- Empfangen von Diagnoseergebnissen von Patientenproben, die von dem Analysator (26) unter Verwendung vorgegebener Parameter des Analysators (26) berechnet worden sind;
- Berechnen des Schwerpunkts der Diagnoseergebnisse der Patientenproben des Analysators (26);
- Vergleichen des Schwerpunkts der Diagnoseergebnisse der Patientenprobe des Analysators (26) mit dem Schwerpunkt von Diagnoseergebnissen einer Referenzpopulation vergleichbarer Analysatoren, um eine Verzerrung in dem Schwerpunkt der Diagnoseergebnisse der Patientenprobe des Analysators (26) zu bestimmen;
- Vergleichen der Verzerrung in dem Schwerpunkt der Diagnoseergebnisse der Patientenprobe des Analysators (26) mit vorbestimmten akzeptablen Grenzen;
- wenn die Verzerrung des Schwerpunkts der Diagnoseergebnisse der Patientenprobe des Analysators (26) innerhalb der vorbestimmten akzeptablen Grenzen liegt, dann wird ein Optimierungsfaktor für die Diagnoseergebnisse der Patientenprobe nicht verwendet, die von dem Analysator (26) unter Verwendung der vorgegebenen Parameter des Analysators (26) berechnet worden sind;
- wenn die Verzerrung des Schwerpunkts der Diagnoseergebnisse der Patientenprobe des Analysators (26) außerhalb der vorbestimmten akzeptablen Grenzen liegt, dann wird der Optimierungsfaktor für die Diagnoseergebnisse der Patientenprobe des Analysators (26) verwendet, um optimierte Diagnoseergebnisse der Patientenprobe zu erhalten; und
- Ausgeben der optimierten oder nicht optimierten Diagnoseergebnisse der Patientenprobe von dem Analysator (26).

2. Automatisiertes Verfahren zum Kalibrieren eines Diagnoseanalysators (26) in Echtzeit, wie in Anspruch 1 definiert,
das ferner den Schritt zum Berechnen des Schwerpunkts der Diagnoseergebnisse einer Referenzpopulation vergleichbarer Analysatoren aufweist, wobei der Schwerpunkt der Diagnoseergebnisse der vergleichbaren Analysatoren der Referenzpopulation unter Verwendung bestimmter ausgewählter Tierarten berechnet wird, und
wobei der Schwerpunkt der Diagnoseergebnisse der Patientenprobe des Analysators (26) unter Verwendung derselben bestimmten Tierarten wie die bestimmten Tierarten, die für die Referenzpopulation verwendet werden, abgeleitet wird.

3. Automatisiertes Verfahren zum Kalibrieren eines Diagnoseanalysators (26) in Echtzeit, wie in Anspruch 1 definiert,
wobei der Diagnoseanalysator (26) ein Hämatologie-Analysator, ein Chemie-Analysator oder ein Blutchemie-Analysator ist.

4. Automatisiertes Verfahren zum Kalibrieren eines Diagnoseanalysators (26) in Echtzeit, wie in Anspruch 1 definiert,
das ferner den folgenden Schritt aufweist:
Bestimmen der akzeptablen Grenzen durch Berechnen der Standardabweichung des Schwerpunkts der Diagnoseergebnisse der Referenzpopulation vergleichbarer Analysatoren.

5. Automatisiertes Verfahren zum Kalibrieren eines Diagnoseanalysators (26) in Echtzeit, wie in Anspruch 1 definiert,
das ferner den folgenden Schritt aufweist:
Bestimmen des Schwerpunkts der Diagnoseergebnisse der Referenzpopulation vergleichbarer Analysatoren.

6. Automatisiertes Verfahren zum Kalibrieren eines Diagnoseanalysators (26) in Echtzeit, wie in Anspruch 1 definiert,
das ferner den folgenden Schritt aufweist:
Bestimmen des Schwerpunkts der Diagnoseergebnisse der Referenzpopulation vergleichbarer Analysatoren, wobei die Referenzpopulation der Diagnoseergebnisse, die zum Bestimmen des Schwerpunkts der Diagnoseergebnisse verwendet wird, auf eine spezifische Charge von Proben beschränkt ist, wobei der Schwerpunkt einer chargenspezifischen Referenzpopulation von Diagnoseergebnissen vergleichbarer Analysatoren abgeleitet wird, wobei der Schwerpunkt der chargenspezifischen Referenzpopulation von Diagnoseergebnissen vergleichbarer Analysatoren mit dem Schwerpunkt der Diagnoseergebnisse der Patientenprobe des Analysators (26) verglichen wird,
um die Verzerrung in dem Schwerpunkt der Diagnoseergebnisse der Patientenprobe des Analysators (26) zu bestimmen.

7. Automatisiertes Verfahren zum Kalibrieren eines Diagnoseanalysators (26) in Echtzeit, wie in Anspruch 1 definiert,
das ferner den folgenden Schritt aufweist:
Bestimmen des Schwerpunkts der Diagnoseergebnisse der Referenzpopulation vergleichbarer Analysatoren, wobei die Referenzpopulation der Diagnoseergebnisse, die zum Bestimmen des Schwerpunkts der Diagnoseergebnisse verwendet wird, Diagnoseergebnisse aus einer Vielzahl von Probenchargen einschließt, wobei der Bestimmungsschritt einen Unterschritt zum Zusammenstellen der Diagnoseergebnisse der Vielzahl von Probenchargen einschließt, wobei der Schwerpunkt einer globalen Referenzpopulation von Diagnoseergebnissen vergleichbarer Analysatoren abgeleitet wird, wobei der Schwerpunkt der globalen Referenzpopulation von Diagnoseergebnissen vergleichbarer Analysatoren mit dem Schwerpunkt der Diagnoseergebnisse der Patientenprobe des Analysators (26) verglichen wird, um die Verzerrung in dem Schwerpunkt der Diagnoseergebnisse der Patientenprobe des Analysators (26) zu bestimmen.

8. System, das einen Diagnoseanalysator und ein automatisiertes System (2) zum Kalibrieren des Diagnoseanalysators (26) in Echtzeit aufweist, wobei der Diagnoseanalysator (26) Berechnungen an diagnostischen Patientenproben unter Verwendung vorgegebener Parameter des Analysators (26) durchführt, wobei der Analysator einen Mikroprozessor aufweist, der dazu ausgebildet ist, folgende Einzelschritte durchzuführen:
- Empfangen von Diagnoseergebnissen von Patientenproben, die von dem Analysator (26) unter Verwendung der vorgegebenen Parameter des Analysators berechnet worden sind;
- Berechnen des Schwerpunkts der Diagnoseergebnisse der Patientenproben des Analysators (26) unter Verwendung der vorgegebenen Parameter des Analysators (26); und
- Vergleichen des Schwerpunkts der Diagnoseergebnisse der Patientenprobe des Analysators (26) mit dem Schwerpunkt von Diagnoseergebnissen einer Referenzpopulation vergleichbarer Analysatoren, um eine Verzerrung in dem Schwerpunkt der Diagnoseergebnisse der Patientenprobe des Analysators (26) zu bestimmen;
- Vergleichen der Verzerrung in dem Schwerpunkt der Diagnoseergebnisse der Patientenprobe des Analysators (26) mit vorbestimmten akzeptablen Grenzen;
- Anwenden eines Optimierungsfaktors auf die Diagnoseergebnisse der Patientenprobe des Analysators (26), wenn die Verzerrung des Schwerpunkts der Diagnoseergebnisse der Patientenprobe des Analysators (26) außerhalb der vorbestimmten akzeptablen Grenzen liegt, um dadurch optimierte Diagnoseergebnisse der Patientenprobe zu erhalten, und Nicht-Anwenden des Optimierungsfaktors auf die Diagnoseergebnisse der Patientenprobe des Analysators (26), wenn die Verzerrung des Schwerpunkts der Diagnoseergebnisse der Patientenprobe des Analysators (26) innerhalb der vorbestimmten akzeptablen Grenzen liegt; und
- Ausgeben der optimierten oder nicht optimierten Diagnoseergebnisse der Patientenproben von dem Analysator (26).

9. System wie in Anspruch 8 definiert,
wobei der Mikroprozessor dazu ausgebildet ist, folgende weitere Einzelschritte durchzuführen:
Berechnen des Schwerpunkts der Diagnoseergebnisse der Referenzpopulation vergleichbarer Analysatoren.

10. System wie in Anspruch 8 definiert,
wobei der Mikroprozessor dazu ausgebildet ist, folgende weitere Einzelschritte durchzuführen:
- Berechnen des Schwerpunkts der Diagnoseergebnisse der Referenzpopulation vergleichbarer Analysatoren, Verwenden der Referenzpopulation von Diagnoseergebnissen, die auf eine spezifische Charge von Proben beschränkt ist, beim Bestimmen des Schwerpunkts der Diagnoseergebnisse, wobei der Schwerpunkt einer chargenspezifischen Referenzpopulation von Diagnoseergebnissen vergleichbarer Analysatoren abgeleitet wird,
- Vergleichen des Schwerpunkts der chargenspezifischen Referenzpopulation von Diagnoseergebnissen vergleichbarer Analysatoren mit dem Schwerpunkt der Diagnoseergebnisse der Patientenprobe des Analysators (26), um die Verzerrung in dem Schwerpunkt der Diagnoseergebnisse der Patientenprobe des Analysators (26) zu bestimmen.

11. System wie in Anspruch 8 definiert,
wobei der Mikroprozessor dazu ausgebildet ist,
folgende weitere Einzelschritte durchzuführen:
Berechnen des Schwerpunkts der Diagnoseergebnisse der Referenzpopulation vergleichbarer Analysatoren, Verwenden der Referenzpopulation von Diagnoseergebnissen, die Diagnoseergebnisse aus einer Vielzahl von Probenchargen beim Bestimmen des Schwerpunkts von Diagnoseergebnissen einschließen, und Zusammenstellen der Diagnoseergebnisse der Vielzahl von Probenchargen, wobei der Schwerpunkt einer globalen Referenzpopulation von Diagnoseergebnissen vergleichbarer Analysatoren abgeleitet wird, wobei der Schwerpunkt der globalen Referenzpopulation von Diagnoseergebnissen vergleichbarer Analysatoren mit dem Schwerpunkt der Diagnoseergebnisse der Patientenprobe des Analysators (26) verglichen wird, um die Verzerrung in dem Schwerpunkt der Diagnoseergebnisse der Patientenprobe des Analysators (26) zu bestimmen.

12. System wie in Anspruch 8 definiert,
wobei der Mikroprozessor dazu ausgebildet ist,
folgende weitere Einzelschritte durchzuführen:
Bestimmen der akzeptablen Grenzen und Berechnen der Standardabweichung des Schwerpunkts der Diagnoseergebnisse der Referenzpopulation vergleichbarer Analysatoren.

13. System (2) wie in einem der Ansprüche 8 bis 12 definiert,
wobei das automatisierte System (2) aufweist:
- einen oder mehrere Speicher (4, 6, 8, 12, 20), in denen ein Schwerpunkt-Algorithmus zum Berechnen des Schwerpunkts von Diagnoseergebnissen von Patientenproben des Analysators (26), der Schwerpunkt von Diagnoseergebnissen einer Referenzpopulation vergleichbarer Analysatoren, eine Logik zum Vergleichen der Schwerpunkte des Analysators und der Referenzpopulation, vorbestimmte akzeptable Grenzen und ein Optimierungsfaktor gespeichert sind;
- einen Mikroprozessor (24), der operativ mit dem einen oder den mehreren Speichern (4, 6, 8, 12, 20) gekoppelt ist, und
wobei der Mikroprozessor dazu ausgebildet ist, weitere folgende Einzelschritte durchzuführen:
- Berechnen des Schwerpunkts der Diagnoseergebnisse der Patientenprobe des Analysators (26), Vergleichen des Schwerpunkts der Diagnoseergebnisse der Patientenprobe des Analysators (26) mit dem Schwerpunkt der Diagnoseergebnisse der Referenzpopulation vergleichbarer Analysatoren und daraus erfolgendes Bestimmen einer Verzerrung in dem Schwerpunkt der Diagnoseergebnisse der Patientenprobe des Analysators (26),
- Vergleichen der Verzerrung in dem Schwerpunkt der Diagnoseergebnisse der Patientenprobe des Analysators (26) mit den vorbestimmten akzeptablen Grenzen, Nicht-Anwenden des Optimierungsfaktors auf die Diagnoseergebnisse der Patientenprobe, die vom Analysator (26) unter Verwendung der vorgegebenen Parameter berechnet worden sind, wenn die Verzerrung des Schwerpunkts der Diagnoseergebnisse der Patientenprobe des Analysators (26) innerhalb der vorbestimmten akzeptablen Grenzen liegt, und Anwenden des Optimierungsfaktors auf die von dem Analysator (26) berechneten Diagnoseergebnisse der Patientenprobe, wenn die Verzerrung des Schwerpunkts der Diagnoseergebnisse der Patientenprobe des Analysators (26) außerhalb der vorbestimmten akzeptablen Grenzen liegt, und Erhalten von optimierten Diagnoseergebnissen der Patientenprobe; und
- Ausgeben der optimierten oder nicht optimierten Diagnoseergebnisse der Patientenprobe.

14. System wie in einem der Ansprüche 8 bis 13 definiert,
wobei der Diagnoseanalysator (26) ein Hämatologie-Analysator, ein Chemie-Analysator oder ein Blutchemie-Analysator ist.

## Revendications

1. Procédé automatisé pour étalonner en temps réel un analyseur de diagnostic (26), qui comprend les étapes consistant à :
- recevoir des résultats de diagnostic d'échantillons de patients calculés par l'analyseur (26) en utilisant des paramètres prédéfinis de l'analyseur (26) ;
- calculer un centroïde des résultats de diagnostic d'échantillons de patients de l'analyseur (26) ;
- comparer le centroïde des résultats de diagnostic d'échantillons de patients de l'analyseur (26) avec un centroïde des résultats de diagnostic d'une population de référence d'analyseurs comparables pour déterminer un biais dans le centroïde des résultats de diagnostic d'échantillons de patients de l'analyseur (26) ;
- comparer le biais dans le centroïde des résultats de diagnostic d'échantillons de patients de l'analyseur (26) avec des limites acceptables prédéterminées ;
- si le biais du centroïde des résultats de diagnostic d'échantillons de patients de l'analyseur (26) se situe dans les limites acceptables prédéterminées, alors ne pas appliquer un facteur d'optimisation aux résultats de diagnostic d'échantillons de patients calculés par l'analyseur (26) en utilisant les paramètres prédéfinis de l'analyseur (26) ;
- si le biais du centroïde des résultats de diagnostic d'échantillons de patients de l'analyseur (26) se situe en dehors des limites acceptables prédéterminées, alors appliquer le facteur d'optimisation aux résultats de diagnostic d'échantillons de patients de l'analyseur (26) pour obtenir des résultats de diagnostic d'échantillons de patients optimisés ; et
- délivrer les résultats de diagnostic d'échantillons de patients optimisés ou non optimisés par l'analyseur (26).

2. Procédé automatisé pour étalonner en temps réel un analyseur de diagnostic (26) selon la revendication 1,
qui comprend en outre l'étape consistant à calculer le centroïde des résultats de diagnostic d'une population de référence d'analyseurs comparables, dans lequel le centroïde des résultats de diagnostic de la population de référence d'analyseurs comparables est calculé en utilisant certaines espèces d'animaux sélectionnées, et dans lequel le centroïde des résultats de diagnostic d'échantillons de patients de l'analyseur (26) est obtenu en utilisant les mêmes certaines espèces d'animaux que les certaines espèces d'animaux utilisées pour la population de référence.

3. Procédé automatisé pour étalonner en temps réel un analyseur de diagnostic (26) selon la revendication 1,
dans lequel l'analyseur de diagnostic (26) est un analyseur d'hématologie, un analyseur de chimie ou un analyseur de chimie du sang.

4. Procédé automatisé pour étalonner en temps réel un analyseur de diagnostic (26) selon la revendication 1,
qui comprend en outre l'étape consistant à :
déterminer les limites acceptables en calculant l'écart-type du centroïde des résultats de diagnostic de la population de référence d'analyseurs comparables.

5. Procédé automatisé pour étalonner en temps réel un analyseur de diagnostic (26) selon la revendication 1,
qui comprend en outre l'étape consistant à :
déterminer le centroïde des résultats de diagnostic de la population de référence d'analyseurs comparables.

6. Procédé automatisé pour étalonner en temps réel un analyseur de diagnostic (26) selon la revendication 1,
qui comprend en outre l'étape consistant à :
déterminer le centroïde des résultats de diagnostic de la population de référence d'analyseurs comparables, la population de référence de résultats de diagnostic utilisée pour déterminer le centroïde des résultats de diagnostic étant limitée à un lot spécifique d'échantillons, et obtenir ainsi un centroïde d'une population de référence spécifique à un lot de résultats de diagnostic d'analyseurs comparables, le centroïde de la population de référence spécifique à un lot de résultats de diagnostic d'analyseurs comparables étant comparé au centroïde des résultats de diagnostic d'échantillons de patients de l'analyseur (26) pour déterminer le biais dans le centroïde des résultats de diagnostic d'échantillons de patients de l'analyseur (26).

7. Procédé automatisé pour étalonner en temps réel un analyseur de diagnostic (26) selon la revendication 1,
qui comprend en outre l'étape consistant à :
déterminer le centroïde des résultats de diagnostic de la population de référence d'analyseurs comparables, la population de référence des résultats de diagnostic utilisée pour déterminer le centroïde des résultats de diagnostic incluant des résultats de diagnostic d'une pluralité de lots d'échantillons, l'étape de détermination incluant la sous-étape consistant à agréger les résultats de diagnostic de la pluralité de lots d'échantillons, et obtenir ainsi un centroïde d'une population de référence globale de résultats de diagnostic d'analyseurs comparables, le centroïde de la population de référence globale de résultats de diagnostic d'analyseurs comparables étant comparé avec le centroïde des résultats de diagnostic d'échantillons de patients de l'analyseur (26) pour déterminer le biais dans le centroïde des résultats de diagnostic d'échantillons de patients de l'analyseur (26).

8. Système comprenant un analyseur de diagnostic et un système automatisé (2) pour étalonner en temps réel l'analyseur de diagnostic (26), l'analyseur de diagnostic (26) effectuant des calculs sur des échantillons de diagnostic de patients en utilisant des paramètres prédéfinis de l'analyseur (26), dans lequel l'analyseur comprend un microprocesseur qui est adapté à exécuter les étapes individuelles consistant à :
- recevoir des résultats de diagnostic d'échantillons de patients calculés par l'analyseur (26) en utilisant les paramètres prédéfinis de l'analyseur ;
- calculer un centroïde des résultats de diagnostic d'échantillons de patients de l'analyseur (26) ;
- comparer le centroïde des résultats de diagnostic d'échantillons de patients de l'analyseur (26) avec un centroïde des résultats de diagnostic d'une population de référence d'analyseurs comparables pour déterminer un biais dans le centroïde des résultats de diagnostic d'échantillons de patients de l'analyseur (26) ;
- comparer le biais dans le centroïde des résultats de diagnostic d'échantillons de patients de l'analyseur (26) avec des limites acceptables prédéterminées ;
- appliquer un facteur d'optimisation aux résultats de diagnostic d'échantillons de patients de l'analyseur (26) si le biais du centroïde des résultats de diagnostic d'échantillons de patients de l'analyseur (26) se situe en dehors des limites acceptables prédéterminées et obtenir ainsi des résultats de diagnostic d'échantillons de patients optimisés, et ne pas appliquer le facteur d'optimisation aux résultats de diagnostic d'échantillons de patients de l'analyseur (26) si le biais du centroïde des résultats de diagnostic d'échantillons de patients de l'analyseur (26) se situe dans les limites acceptables prédéterminées ; et
- délivrer les résultats de diagnostic d'échantillons de patients optimisés ou non optimisés par l'analyseur (26).

9. Système selon la revendication 8,
dans lequel le microprocesseur est adapté à exécuter en outre l'étape individuelle consistant à :
calculer le centroïde des résultats de diagnostic de la population de référence d'analyseurs comparables.

10. Système selon la revendication 8,
dans lequel le microprocesseur est adapté à exécuter en outre les étapes individuelles consistant à :
- calculer le centroïde des résultats de diagnostic de la population de référence d'analyseurs comparables, en utilisant la population de référence de résultats de diagnostic qui est limitée à un lot spécifique d'échantillons pour déterminer le centroïde des résultats de diagnostic, et obtenir ainsi un centroïde d'une population de référence spécifique à un lot de résultats de diagnostic d'analyseurs comparables,
- comparer le centroïde de la population de référence spécifique à un lot de résultats de diagnostic d'analyseurs comparables avec le centroïde des résultats de diagnostic d'échantillons de patients de l'analyseur (26) pour déterminer le biais dans le centroïde des résultats de diagnostic d'échantillons de patients de l'analyseur (26).

11. Système selon la revendication 8,
dans lequel le microprocesseur est adapté à exécuter en outre les étapes individuelles consistant à :
calculer le centroïde des résultats de diagnostic de la population de référence d'analyseurs comparables, en utilisant la population de référence de résultats de diagnostic qui inclut les résultats de diagnostic d'une pluralité de lots d'échantillons pour déterminer le centroïde des résultats de diagnostic, et agréger les résultats de diagnostic de la pluralité de lots d'échantillons, et obtenir ainsi un centroïde d'une population de référence globale de résultats de diagnostic d'analyseurs comparables, le centroïde de la population de référence globale de résultats de diagnostic d'analyseurs comparables étant comparé avec le centroïde des résultats de diagnostic d'échantillons de patients de l'analyseur (26) pour déterminer le biais dans le centroïde des résultats de diagnostic d'échantillons de patients de l'analyseur (26).

12. Système selon la revendication 8,
dans lequel le microprocesseur est adapté à exécuter en outre les étapes individuelles consistant à :
déterminer les limites acceptables, et calculer l'écart type du centroïde des résultats de diagnostic de la population de référence d'analyseurs comparables.

13. Système (2) selon l'une quelconque des revendications 8 à 12,
dans lequel le système automatisé (2) comprend :
- une ou plusieurs mémoires (4, 6, 8, 12, 20) dans lesquelles sont stockés un algorithme de centroïde pour calculer un centroïde des résultats de diagnostic d'échantillons de patients de l'analyseur (26), un centroïde des résultats de diagnostic d'une population de référence d'analyseurs comparables, une logique pour comparer les centroïdes de l'analyseur et de la population de référence, des limites acceptables prédéterminées et un facteur d'optimisation ;
- un microprocesseur (24) couplé fonctionnellement auxdites une ou plusieurs mémoires (4, 6, 8, 12, 20), et
dans lequel le microprocesseur est adapté à exécuter en outre les étapes individuelles consistant à :
- calculer le centroïde des résultats de diagnostic d'échantillons de patients de l'analyseur (26), comparer le centroïde des résultats de diagnostic d'échantillons de patients de l'analyseur (26) avec le centroïde des résultats de diagnostic de la population de référence d'analyseurs comparables et en déterminer un biais dans le centroïde des résultats de diagnostic d'échantillons de patients de l'analyseur (26),
- comparer le biais dans le centroïde des résultats de diagnostic d'échantillons de patients de l'analyseur (26) avec les limites acceptables prédéterminées, ne pas appliquer le facteur d'optimisation aux résultats de diagnostic d'échantillons de patients calculés par l'analyseur (26) en utilisant les paramètres prédéfinis si le biais du centroïde des résultats de diagnostic d'échantillons de patients de l'analyseur (26) se situe dans les limites acceptables prédéterminées, et appliquer le facteur d'optimisation aux résultats de diagnostic d'échantillons de patients calculés par l'analyseur (26) si le biais du centroïde des résultats de diagnostic d'échantillons de patients de l'analyseur (26) se situe en dehors des limites acceptables prédéterminées, et obtenir des résultats de diagnostic d'échantillons de patients optimisés ; et
- délivrer les résultats de diagnostic d'échantillons de patients optimisés ou non optimisés.

14. Système selon l'une quelconque des revendications 8 à 13,
dans lequel l'analyseur de diagnostic (26) est un analyseur d'hématologie, un analyseur de chimie ou un analyseur de chimie du sang.
